# FASCICULE DE BREVET EUROPEEN

(11) **EP 2 657 002 B1**
(45) Date de publication et mention de la délivrance du brevet: **05.11.2014**
(21) Numéro de dépôt: 13305503.8
(22) Date de dépôt: 18.04.2013
(51) Int. Cl.: B29C 70/46, B29C 53/08, B29L 31/00, B29D 99/00

(54) **Procede de realisation d'un profile courbe en materiau composite a partir d'une preforme rectiligne de nappes de fibres**
Herstellungsverfahren eines gebogenen Profils aus Verbundmaterial auf der Basis einer geradlinigen Vorform aus Fasermatten
Method for producing a curved profile made of composite material from a rectilinear preform of fibre layers

(30) Priorité: 23.04.2012 FR 1253674
(43) Date de publication de la demande: 30.10.2013
(73) Titulaire: Airbus Opérations SAS, 31060 Toulouse (FR)
(72) Inventeur: De Mattia, Denis, 44115 Basse Goulaine (FR)
(74) Mandataire: Fantin, Laurent

(56) Documents cités:
- EP-A1- 1 031 406
- EP-A1- 2 639 047
- DE-A1- 4 335 062
- FR-A1- 2 928 295
- FR-A1- 2 952 577

## Description

La présente invention se rapporte à un procédé de réalisation d'un profilé courbe en matériau composite à partir d'une préforme rectiligne de nappes de fibres. L'invention concerne plus particulièrement un procédé de réalisation d'un cadre d'un fuselage d'un aéronef.

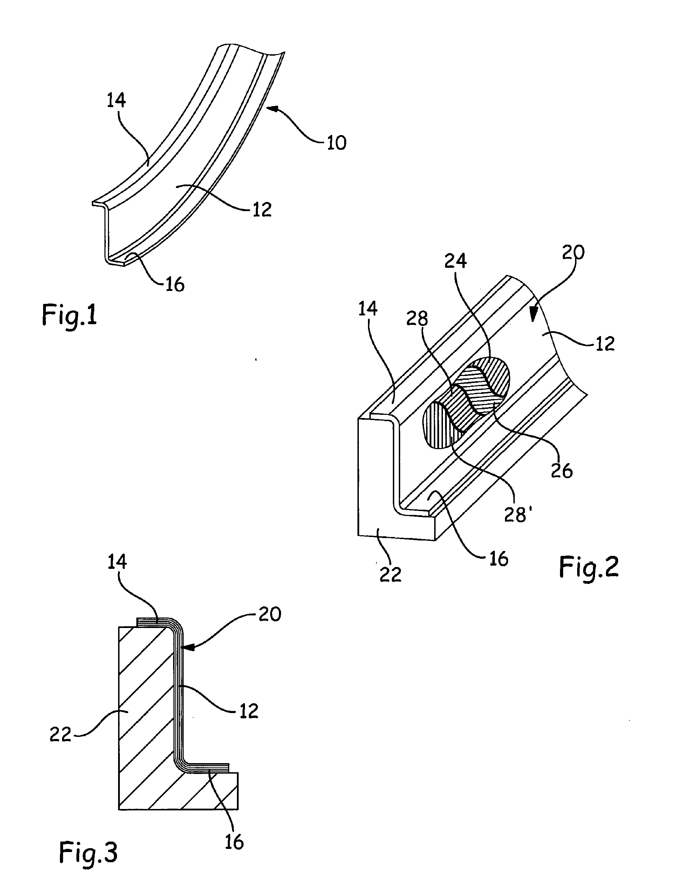

Selon un mode de réalisation illustré sur la figure 1, un cadre de fuselage 10 se présente sous la forme d'un profilé avec une section en Z, dont la portion centrale appelée âme 12 forme un anneau complet ou partiel. Le profilé comprend une première aile 14 dite aile intérieure disposée au niveau du bord intérieur de l'âme 12 et perpendiculaire à cette dernière et une seconde aile 16 dite aile extérieure disposée au niveau du bord extérieur de l'âme 12, également perpendiculaire à cette dernière.

Un procédé de réalisation d'un tel cadre en matériau composite, conformément au préambule de la revendication 1, est décrit dans le document FR-2.928.295.

Selon ce document, on réalise dans un premier temps une bande sensiblement rectangulaire à partir d'un empilage de trois nappes de fibres pré-imprégnées, chaque nappe ayant des fibres orientées selon une direction, la bande comportant des nappes avec des orientations de fibres différentes, une nappe avec des fibres à 30°, une nappe avec des fibres à 90° et une autre nappe avec des fibres à 150°.

Dans un second temps, la bande de nappes de fibres est disposée sur un mandrin en matériau déformable puis comprimée sur ce mandrin de manière à épouser sa forme.

Le mandrin déformable est susceptible de se déformer entre une position rectiligne et une position courbe mais a une section transversale incompressible ou quasi incompressible.

En suivant, la bande déformée disposée sur le mandrin en matériau déformable est mise en contact contre un outillage chauffé présentant en périphérie des sections radiales avec un profil complémentaire aux sections transversales du mandrin. Ainsi lors du cintrage, la bande est comprimée et subit une augmentation de température.

Suite à la mise en place de cette première bande, on découpe une deuxième bande de trois nappes de fibres pré-imprégnées pour la disposer sur un autre mandrin déformable puis la comprimer sur ce dernier.

En suivant, cette deuxième bande déformée sur son mandrin en matériau déformable est mise en contact contre la première bande toujours en place sur l'outillage puis comprimée contre la première bande.

Pour obtenir un cadre, il est nécessaire de rapporter comme précédemment plusieurs bandes les unes sur les autres, avant de polymériser l'ensemble ainsi formé.

En complément, des nappes avec des fibres orientées à 0° peuvent être rajoutées manuellement entre certaines bandes.

Ce mode opératoire n'est pas pleinement satisfaisant pour les raisons suivantes : En premier lieu, la mise en oeuvre est relativement longue et fastidieuse du fait que le profilé est réalisé pas à pas, un grand nombre de bandes devant être déformées et cintrées successivement.

En second lieu, le positionnement relatif entre les bandes s'avère difficile à réaliser car les bandes sont constituées de fibres pré-imprégnées et peuvent difficilement glisser l'une par rapport à l'autre pour corriger leur position relative. Aussi, il est difficile de garantir que lors du cintrage les deux ailes intérieures des deux bandes, les deux âmes des deux bandes et les deux ailes extérieures des deux bandes soient parfaitement en contact les unes avec les autres sur toute la longueur du cadre. Compte tenu de ces difficultés de mise en place, les opérateurs doivent intervenir à de nombreuses reprises pour tenter de corriger manuellement les défauts constatés.

Selon une autre problématique, au fur et à mesure de l'empilement des bandes, les rayons externes augmentent de valeur alors que les rayons internes diminuent si bien que l'écart de valeur entre la bande déjà en place sur l'outillage de cintrage et la bande rapportée conduit à un défaut appelé pontage, les deux bandes n'étant pas intimement plaquées l'une contre l'autre en fond de rayon de courbure. Ce défaut va provoquer lors de la polymérisation des ondulations préjudiciables pour la qualité de la pièce.

Selon une autre problématique, il est impossible de cintrer les bandes après leurs compactages sans provoquer un glissement entre les nappes de fibres pré-imprégnées et de la sorte des ondulations ou des plissements de fibres.

Selon une autre problématique, les nappes de la première bande restent en contact avec l'outillage chauffé à une température de l'ordre de 50°C bien plus longtemps que les nappes de la dernière bande rapportée, ce qui induit un vieillissement accéléré et non maitrisé de la résine imprégnant les premières nappes.

Selon un autre inconvénient, ce mode opératoire conduit à une productivité faible du fait qu'une multitude de phases de cintrage doivent être réalisées successivement.

Enfin, selon une autre problématique, les fibres orientées à 0° doivent être déposées manuellement sur les formes cintrées afin de réduire le risque d'ondulation. Cette dépose manuelle tend à augmenter le temps et le coût de production.

Aussi, la présente invention vise à remédier aux inconvénients de l'art antérieur en proposant un procédé de réalisation d'un profilé courbe en matériau composite à partir d'une préforme rectiligne de nappes de fibres permettant de réduire les risques d'ondulation des fibres orientées à 0°, notamment au niveau de l'aile intérieure.

A cet effet, l'invention a pour objet un procédé de réalisation d'un profilé courbe à partir d'une préforme rectiligne de nappes de fibres pré-imprégnées conformément à la revendication 1.

D'autres caractéristiques et avantages ressortiront de la description qui va suivre de l'invention, description donnée à titre d'exemple uniquement, en regard des dessins annexés sur lesquels :
- La figure 1 est une vue en perspective d'une portion d'un cadre d'un fuselage d'un aéronef,
- La figure 2 est une vue en perspective d'un empilage de nappes sur un mandrin déformable rectiligne avec un arrachement permettant d'illustrer l'orientation des fibres des nappes empilées,
- La figure 3 est une coupe transversale de l'empilage de nappes de fibres et du mandrin de la figure 2,
- La figure 4 est une représentation schématique d'un dispositif de cintrage utilisé pour courber l'empilage de nappes et le mandrin de la figure 2,
- La figure 5 est une illustration de l'orientation de certaines fibres avant le cintrage,
- La figure 6 est une illustration de l'orientation des mêmes fibres que la figure 5 après l'opération de cintrage,
- La figure 7 est une coupe d'un empilage de nappes, et
- La figure 8 est une coupe d'un outillage de cintrage selon un mode de réalisation préféré.

Sur la figure 1, on a représenté un cadre de fuselage 10 sous la forme d'un profilé avec une section en Z, dont la portion centrale appelée âme 12 forme un anneau complet ou partiel. Le profilé comprend une première aile 14 dite aile intérieure disposée au niveau du bord intérieur de l'âme 12 et perpendiculaire à cette dernière et une seconde aile 16 dite aile extérieure disposée au niveau du bord extérieur de l'âme 12, également perpendiculaire à cette dernière.

Pour donner un ordre de grandeur, l'âme a une hauteur de 80 mm, une épaisseur de l'ordre de 4 à 6 mm. Les ailes ont une largeur de l'ordre de 30 mm.

L'invention n'est pas limitée à cette forme de section et à cette application. Ainsi, l'invention peut permettre d'obtenir différents profilés courbes avec une section en J, en Z, en L, en Oméga ou autre.

Selon l'invention, le profilé 10 est courbé selon un axe de rotation X et un rayon de courbure R. Ainsi, le profilé courbe 10 comprend au moins une première partie, plus particulièrement l'âme 12, dans un plan perpendiculaire à l'axe de rotation X et au moins une deuxième partie, plus particulièrement l'aile 14, parallèle à l'axe X. Les différentes parties du profilé sont reliées entre elles par des portions courbes. Ainsi, une première surface d'une première partie est continue avec une première surface de chaque autre partie. Ces premières surfaces forment une surface dite par la suite surface extérieure. De la même manière, une seconde surface de la première partie est continue avec une seconde surface de chaque autre partie. Ces secondes surfaces forment une surface dite par la suite surface intérieure dont une portion est orientée vers l'axe de rotation X.

Selon l'invention, le profilé courbe 10 comprend un empilage de N nappes, N étant un entier supérieur à dix nappes. Pour donner un ordre de grandeur, le profilé comprend une cinquantaine de nappes.

Les nappes comprennent des fibres pré-imprégnées orientées pour chaque nappe selon une direction.

Ce profilé courbe est obtenu à partir d'une préforme rectiligne 20 ayant des sections transversales identiques à celles du profilé courbe 10 à obtenir.

On entend par direction longitudinale la plus grande dimension de la préforme rectiligne. Un plan transversal est un plan perpendiculaire à la direction longitudinale.

La préforme rectiligne 20 est obtenue par l'empilage des N nappes nécessaires pour former le profilé courbe sur un mandrin déformable 22.

Par déformable, on entend que le mandrin peut se déformer entre une position rectiligne et une position courbe mais a une section transversale incompressible ou quasi incompressible.

Selon un mode de réalisation, le mandrin est en élastomère.

Le mandrin déformable 22 comprend une section complémentaire à celle du profilé courbe.

Les N nappes du profilé courbe sont empilées les unes sur les autres, la première nappe déposée sur le mandrin formant la surface extérieure du profilé et la dernière nappe déposée formant la surface intérieure du profilé.

Comme illustré sur la figure 2, certaines nappes 24 peuvent avoir des fibres orientées à A° par rapport à la direction longitudinale et d'autres nappes 26 peuvent avoir des fibres orientées à -A° par rapport à la direction longitudinale, A pouvant varier de 10 à 90°.

Les valeurs A sont déterminées en fonction des caractéristiques mécaniques recherchées. Ces valeurs A sont déterminées par le bureau d'étude et doivent respecter un intervalle de tolérance de +/-3°. Ainsi, lorsque la valeur A nominale de l'orientation est de 30°, les fibres doivent former un angle avec la direction longitudinale compris entre 27° et 33°.

A titre d'exemple, certaines nappes peuvent avoir des fibres orientées à 30° et d'autres nappes des fibres orientées à -30°. Certaines nappes peuvent avoir des fibres orientées à 60° et d'autres nappes des fibres orientées à -60°. Certaines nappes 28, 28' peuvent avoir des fibres orientées respectivement à 0°, 90°.

De préférence, pour chaque valeur de A, le profilé courbe comprend autant de nappes avec des fibres orientées à A° que de nappes avec des fibres orientées à -A°. Lorsque le profilé courbe 10 comprend un empilage de 10 à 20 nappes, il peut comprendre M' nappes avec des fibres orientées à A° et M' +/-1 nappes avec des fibres orientées à -A°. Au-delà de 20 nappes, le profilé peut comprendre M nappes avec des fibres orientées à A° et M +/-5% nappes avec des fibres orientées à -A°.

Avantageusement, une nappe avec des fibres orientées à A° est adjacente à une nappe avec des fibres orientées à -A°.

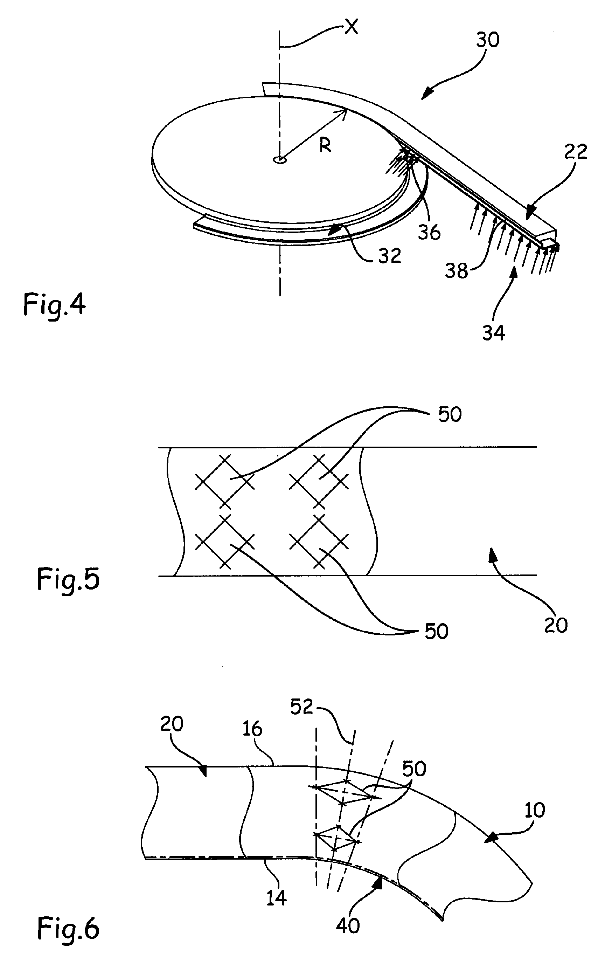

Lorsque toutes les nappes du profilé courbe 10 sont rapportées sur le mandrin déformable 22, on opère une phase de cintrage en utilisant un dispositif de cintrage 30. Lors de la phase de cintrage, le mandrin et toutes les nappes sont enroulés sur un outillage de cintrage 32 du dispositif de cintrage 30, comme illustré sur la figure 4, l'outillage de cintrage 32 présentant des sections complémentaires aux sections de la surface intérieure du profilé courbe.

Selon un point important de l'invention, le dispositif de cintrage 30 comprend des moyens pour chauffer 34 la préforme rectiligne 20 et des moyens pour refroidir 36 la face 38 de l'aile 14 susceptible d'être en contact avec l'outillage de cintrage 32, les moyens pour refroidir 36 étant interposés entre les moyens pour chauffer 34 et la zone de cintrage (zone au niveau de laquelle la préforme vient en contact avec l'outillage de cintrage).

Ce préchauffage et ce refroidissement sont opérés en continu.

De préférence, les moyens pour chauffer 34 permettent d'élever la température de la préforme à une température de l'ordre de 70°C dans l'ensemble de la section de la préforme. Selon un mode de réalisation, la préforme est chauffée avec de l'air chaud pulsé, sur une portion située à environ 500 mm en amont de la zone de déformation.

De préférence, les moyens pour refroidir 36 permettent de refroidir la face 38 de l'aile intérieure à une température de l'ordre de 15 à 20°C. Selon un mode de réalisation, la face 38 est refroidie avec de l'air frais pulsé, sur une portion située à environ 100 mm en amont de la zone de déformation.

Ainsi, chaque section de la préforme est dans un premier temps chauffée dans son ensemble puis subit un refroidissement localisé au niveau de la face 38 de l'aile intérieure susceptible d'être en contact avec l'outillage juste avant son introduction dans l'outillage de cintrage.

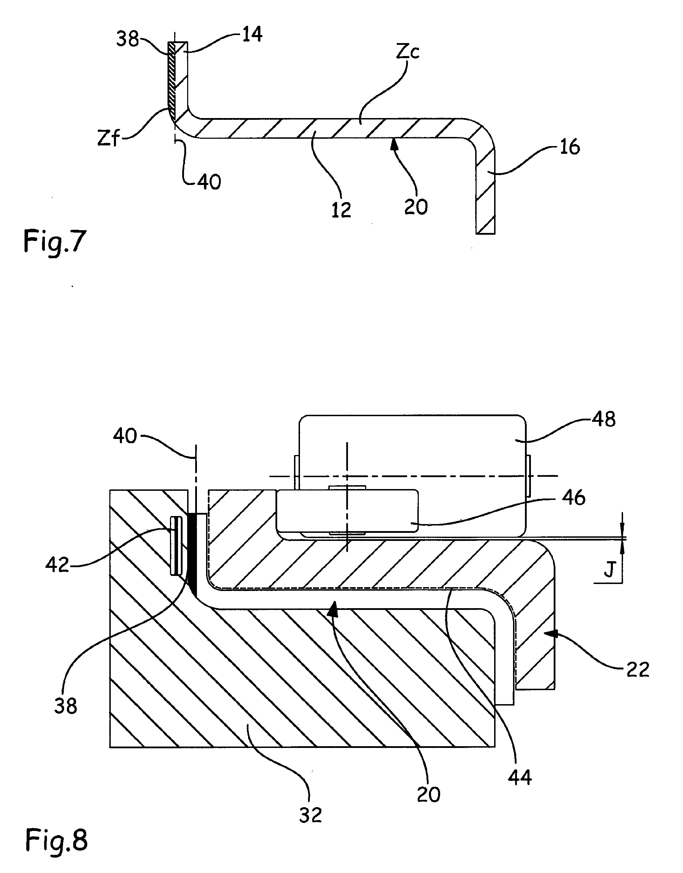

Comme illustré sur la figure 7, grâce à ce pilotage de la température, on obtient une répartition thermique dans la section avec deux zones, la zone Zc correspondant à la zone chaude et la zone Zf correspondant à la zone froide, les deux zones étant séparées par un fort gradient thermique matérialisé par une droite, sensiblement parallèle à la face 38 de l'aile intérieure refroidie, correspondant à une fibre neutre 40 thermique.

Ce mode de chauffage de la préforme permet d'obtenir une fibre neutre 40 thermique la plus proche possible de la face 38 de l'aile intérieure en contact avec l'outillage de cintrage 32. Toutes les fibres situées à l'extérieur de la fibre neutre 40 vont être soumises à des efforts de traction et ne vont pas onduler. La fibre neutre 40 étant très proche de la surface extérieure de l'aile intérieure, les fibres orientées à 0° situées à ce niveau ne vont pas être soumises à un effort de compression et ne vont pas avoir tendance à onduler. Selon une autre caractéristique de l'invention, le procédé consiste à créer une forte adhérence entre la face 38 de l'aile intérieure et l'outillage de cintrage 32. Pour générer cette forte adhérence, l'outillage de cintrage 32 comprend des moyens de chauffage 42 (visibles sur la figure 8) pour porter au moins sa surface susceptible d'être en contact avec la face 38 à une température de l'ordre de 30°C alors que la face 38 a une température de 15°C à 20°C. Ainsi, la surface de l'outillage et la face 38 ont des températures différentes, l'outillage ayant une température supérieure de l'ordre de 5°C par rapport à celle de la face 38 de la préforme. Cette solution permet de limiter le glissement des fibres disposées au niveau de la face 38 et donc l'apparition d'ondulations desdites fibres.

Avantageusement, le procédé consiste à créer une faible adhérence entre les surfaces de la préforme et le mandrin 22. Selon un mode de réalisation illustré sur la figure 8, deux films 44 sont superposés entre la préforme et le mandrin, lesdits films ayant une faible adhérence entre eux. Les films 44 peuvent être des films séparateurs, par exemple en fluoroéthylène propylène.

Comme illustré sur la figure 8, le dispositif de cintrage comprend des galets permettant de plaquer le mandrin 22 contre l'outillage de cintrage, un premier galet 46 susceptible de plaquer la partie du mandrin 22 qui plaque l'aile intérieure de la préforme contre l'outillage de cintrage et un second galet 48 dont la génératrice est parallèle à l'âme. De préférence, un faible jeu J est conservé entre le galet 48 et le mandrin afin de favoriser le glissement entre le mandrin et la préforme.

L'opération de cintrage de toutes les nappes lors d'une seule et même opération de cintrage est possible notamment du fait d'un nombre identique ou quasi identique de nappes avec des fibres orientées à A° et de nappes avec des fibres orientées à -A°.

Les fibres orientées à A° forment avec les fibres orientées à -A° des losanges élémentaires 50 tous identiques lorsque la préforme est rectiligne comme illustré sur la figure 5. Après déformation, les losanges élémentaires sont toujours symétriques par rapport à une direction radiale 52. Lors de la déformation, les points d'intersections des fibres A° et -A° agissent comme des noeuds au niveau desquels pivotent les fibres. Ainsi, les nappes avec des fibres orientées à A° et celles avec des fibres orientées à -A° se déforment sans plissement.

Selon un mode de réalisation préféré et illustré sur la figure 6, tous les losanges élémentaires se déforment de manière symétrique par rapport à des directions radiales 52. La fibre neutre 40 étant disposée au niveau de l'aile intérieure 14, tous les losanges élémentaires 50 s'étirent selon une direction perpendiculaire à la direction radiale. Dans ce cas, toutes les fibres sont soumises à un effort de traction et aucun plissement n'est possible.

Comme illustré sur la figure 6, l'orientation des fibres orientées à A° et -A° dans la préforme rectiligne est modifiée après le cintrage.

Ainsi, l'angle formé par les fibres orientées initialement à A° diminue en fonction de l'éloignement de l'axe de rotation X alors que celui formé par les fibres orientées initialement à -A° augmente en fonction de l'éloignement de l'axe de rotation X.

Compte tenu de l'intervalle de tolérance +/-IT fixé par le bureau d'étude de l'ordre de +/- 3°, les fibres censées être orientées à A° seront positionnées à A+IT° avant le cintrage et les fibres censées être orientées à -A° seront positionnées à -(A+IT)° avant le cintrage. Selon cet agencement après la phase de cintrage, toutes les fibres sont orientées correctement et forment un angle de +A +/-IT ou de -A +/-IT. Cet agencement permet d'augmenter significativement la hauteur de l'âme. A titre d'exemple, la hauteur de l'âme était limitée à approximativement 80 mm pour l'art antérieur alors qu'elle peut atteindre approximativement 170 mm pour l'invention.

Lorsque A = 30° et que l'intervalle de tolérance est de +/- 3°, avant déformation, les fibres de certaines nappes sont orientées à +33° alors que les fibres d'autres nappes sont orientées à -33°. Dans ce cas, après cintrage, toutes les fibres sont correctement orientées et respectent l'intervalle de tolérance. Ainsi, pour certaines nappes, les fibres proches de l'aile intérieure 14 sont orientées à 33° et les fibres proches de l'aile extérieure 16 sont orientées à 27° et respectent toutes l'orientation de 30° +/-3°.

Après la phase de cintrage, les nappes cintrées sont polymérisées. Selon un mode de réalisation, on peut retirer le mandrin déformable et appliquer une vessie au-dessus de la préforme cintrée pour exercer une pression sur les nappes lors du cycle de température. En variante, la vessie peut être rapportée au-dessus du mandrin lors de la phase de polymérisation, le mandrin assurant la fonction de plaque pour conformer la surface extérieure du profilé courbe.

Le procédé de l'invention procure les avantages suivants :
En premier lieu, le procédé permet de réduire fortement les coûts et le temps de réalisation dans la mesure où toutes les nappes sont cintrées en une seule phase et non pas selon un procédé pas à pas.
En second lieu, le procédé de l'invention permet de limiter les rebuts en raison de l'absence de plissement ou de pontage au niveau des rayons de courbure.

Selon un autre avantage, il est possible de réaliser des profilés avec des âmes de plus grandes dimensions.

Selon un autre avantage, le fait que la fibre neutre soit positionnée au niveau de la face 38 de l'aile intérieure en contact avec l'outillage de cintrage permet de ne pas induire d'efforts de compression au niveau des fibres orientées à 0° dans l'aile intérieure qui par conséquent n'ondulent pas.

Selon un autre avantage, le procédé de l'invention permet de maîtriser la position des fibres de renforts au niveau de l'âme dans la mesure où la fibre neutre est parfaitement positionnée au niveau de la face 38.

Selon un avantage de l'invention, la vitesse de cintrage est nettement supérieure à celle de l'art antérieur, de l'ordre de 8 mm/s, car la préforme est préchauffée en amont de l'outillage de cintrage.

Enfin, le procédé assure une meilleure maîtrise du vieillissement de la résine dans la mesure où seule la portion déformée subit une élévation de température.

## Revendications

1. Procédé de réalisation d'un profilé courbe à partir d'une préforme rectiligne de nappes de fibres pré-imprégnées, ledit procédé consistant à empiler des nappes sur un mandrin déformable (22) et à enrouler ledit mandrin déformable (22) et les nappes empilées sur un outillage de cintrage (32) selon un axe de rotation (X), ledit profilé (10) comprenant un empilage de N nappes, au moins une première partie (12) du profilé étant disposée dans un plan perpendiculaire à l'axe de rotation (X) et au moins une deuxième partie (14, 16) parallèle à l'axe (X) dont une face (38) est susceptible d'être en contact avec l'outillage de cintrage (32), **caractérisé en ce qu'il** consiste à empiler les N nappes de fibres sur le mandrin déformable (22), à générer un gradient thermique entre la face (38) et le reste de la préforme qui est plus chaud que ladite face (38), à cintrer en une seule phase les N nappes intercalées entre le mandrin déformable (22) et l'outillage de cintrage (32) et à polymériser lesdites N nappes cintrées.

2. Procédé selon la revendication 1, **caractérisé en ce que** chaque section de la préforme est dans un premier temps chauffée dans son ensemble puis subit un refroidissement localisé au niveau de la face (38) juste avant son introduction dans l'outillage de cintrage.

3. Procédé selon la revendication 2, **caractérisé en ce que** la section de la préforme est portée à une température de 70°C.

4. Procédé selon la revendication 3, **caractérisé en ce que** la face (38) est refroidie à une température comprise entre 15 et 20°C.

5. Procédé selon l'une quelconque des revendications précédentes, **caractérisé en ce qu'il** consiste à créer une forte adhérence entre la face (38) de la préforme et l'outillage de cintrage.

6. Procédé selon la revendication 5, **caractérisé en ce qu'il** consiste à générer une différence de température entre la surface de l'outillage de cintrage en contact avec la face (38) de la préforme et ladite face (38).

7. Procédé selon la revendication 6, **caractérisé en ce que** la surface de l'outillage de cintrage en contact avec la face (38) de la préforme a une température supérieure de 5°C à celle de la face (38) de la préforme.

8. Procédé selon l'une quelconque des revendications précédentes, **caractérisé en ce qu'il** consiste à créer une faible adhérence entre les surfaces de la préforme et le mandrin déformable (22).

9. Procédé selon la revendication 8, **caractérisé en ce qu'il** consiste à intercaler entre les surfaces de la préforme et le mandrin déformable (22) deux films superposés ayant une faible adhérence entre eux.

10. Procédé selon l'une quelconque des revendications précédentes, **caractérisé en ce qu'il** consiste à utiliser des galets permettant de plaquer le mandrin (22) contre l'outillage de cintrage, un premier galet (46) pour plaquer la partie du mandrin (22) qui plaque la deuxième partie (14) de la préforme contre l'outillage de cintrage et un second galet (48) dont une génératrice est parallèle à la première partie (12) de la préforme et espacée du mandrin déformable (22) d'un faible jeu J pour favoriser le glissement entre le mandrin et la préforme.

## Patentansprüche

1. Verfahren zur Herstellung eines gebogenen Profils ausgehend von einer geraden Vorform aus Lagen von vorimprägnierten Fasern, wobei das Verfahren darin besteht, die Lagen auf einem verformbaren Kern (22) aufzuschichten und den verformbaren Kern (22) mit den aufgeschichteten Lagen auf ein Biegewerkzeug (32) um eine Drehachse (X) aufzurollen, wobei das Profil (10) eine Aufschichtung von N Lagen aufweist und wenigstens ein erster Teil (12) des Profils in einer im rechten Winkel zur Drehachse (X) ausgerichteten Ebene angeordnet ist und wenigstens ein zweiter Teil (14, 16) parallel zur Achse (X) angeordnet ist, von dem eine Außenseite (38) dazu eingerichtet ist, in Kontakt mit dem Biegewerkzeug (32) zu stehen, **dadurch gekennzeichnet, dass** dieses darin besteht, die N Lagen an Fasern auf den verformbaren Kern (22) aufzuschichten, einen Temperaturgradienten zwischen der Außenseite (38) und dem Rest der Vorform zu schaffen, die wärmer als die Außenseite (38) ist, und in einem Arbeitsgang die N Lagen, die zwischen den verformbaren Kern (22) und das Biegewerkzeug (32) eingebracht sind, zu biegen und die gebogenen N Lagen zu polymerisieren.

2. Verfahren nach Anspruch 1, **dadurch gekennzeichnet, dass** jeder Abschnitt der Vorform zunächst in seiner Gesamtheit erwärmt und dann lokal im Bereich der Außenseite (38) kurz vor seiner Einführung in das Biegewerkzeug abgekühlt wird.

3. Verfahren nach Anspruch 2, **dadurch gekennzeichnet, dass** der Abschnitt der Vorform auf eine Temperatur von 70°C gebracht wird.

4. Verfahren nach Anspruch 3, **dadurch gekennzeichnet, dass** die Außenseite (38) auf eine Temperatur zwischen 15 und 20°C abgekühlt wird.

5. Verfahren nach einem der vorhergehenden Ansprüche, **dadurch gekennzeichnet, dass** dieses darin besteht, eine starke Haftkraft zwischen der Außenseite (38) der Vorform und dem Biegewerkzeug zu schaffen.

6. Verfahren nach Anspruch 5, **dadurch gekennzeichnet, dass** dieses darin besteht, einen Temperaturunterschied zwischen der in Kontakt mit der Außenseite (38) der Vorform stehenden Oberfläche des Biegewerkzeugs und der Außenseite (38) zu schaffen.

7. Verfahren nach Anspruch 6, **dadurch gekennzeichnet, dass** die in Kontakt mit der Außenseite (38) der Vorform stehende Oberflächen des Biegewerkzeuges eine Temperatur von mehr als 5°C über der Temperatur der Außenseite (38) der Vorform aufweist.

8. Verfahren nach einem der vorhergehenden Ansprüche, **dadurch gekennzeichnet, dass** dieses darin besteht, eine schwache Haftkraft zwischen den Oberflächen der Vorform und dem verformbaren Kern (22) zu schaffen.

9. Verfahren nach Anspruch 8, **dadurch gekennzeichnet, dass** dieses darin besteht, zwischen die Oberflächen der Vorform und dem verformbaren Kern (22) zwei aufein anderliegende Filme aufzubringen, die untereinander eine geringe Haftkraft aufweisen.

10. Verfahren nach einem der vorhergehenden Ansprüche, **dadurch gekennzeichnet, dass** dieses darin besteht, Rollen zu verwenden, die es gestatten, den Kern (22) gegen das Biegewerkzeug zu drücken, eine erste Rolle (46), um auf denjenigen Teil des Kerns (22) zu drücken, der den zweiten Teil (14) der Vorform gegen das Biegewerkzeug drückt, und eine zweite Rolle (48), deren Mantellinie parallel zum ersten Teil (12) der Vorform ausgerichtet ist und mit einer geringen Toleranz J im Abstand zum verformbaren Kern (22) angeordnet ist, um das Gleiten zwischen dem Kern und der Vorform zu unterstützen.

## Claims

1. A method for producing a curved profile from a rectilinear preform of preimpregnated fiber webs, said method consisting of stacking webs on the deformable mandrel (22) and winding said deformable mandrel (22) and the stacked webs on a bending tool (32) along an axis of rotation (X), said profile (10) comprising a stack of N webs, at least one first part (12) of the profile being positioned in a plane perpendicular to the axis of rotation (X) and at least one second part (14, 16) parallel to the axis (X) whereof a face (38) can be in contact with the bending tool (32), **characterized in that** it consists of stacking the N fiber webs on the deformable mandrel (22), generating a heat gradient between the face (38) and the rest of the preform that is hotter than said face (38), bending, in a single phase, the N webs inserted between the deformable mandrel (22) and the bending tool (32), and polymerizing said N bent webs.

2. The method according to claim 1, **characterized in that** each section of the preform is first heated in its entirety, then undergoes localized cooling at the face (38) just before being introduced into the bending tool.

3. The method according to claim 1, **characterized in that** the section of the preform is brought to a temperature of 70°C.

4. The method according to claim 3, **characterized in that** the face (38) is cooled to a temperature comprised between 15 and 20°C.

5. The method according to any one of the preceding claims, **characterized in that** it consists of creating a strong adhesion between the face (38) of the preform and the bending tool.

6. The method according to claim 5, **characterized in that** it consists of generating a temperature difference between the surface of the bending tool in contact with the face (38) of the preform and said face (38).

7. The method according to claim 6, **characterized in that** the surface of the bending tool in contact with the face (38) of the preform has a temperature 5°C higher than that of the face (38) of the preform.

8. The method according to any one of the preceding claims, **characterized in that** it consists of creating a low adhesion between the surfaces of the preform and the deformable mandrel (22).

9. The method according to claim 8, **characterized in that** it consists of inserting, between the surfaces of the preform and the deformable mandrel (22), two superimposed films having a low adhesion relative to one another.

10. The method according to any one of the preceding claims, **characterized in that** it consists of using hollers making it possible to press the mandrel (22) against the bending tool, a first roller (46) capable of pressing the part of the mandrel (22) that presses the second part (14) of the preform against the bending tool and a second roller (48) whereof the generatrix is parallel to the core (12) of the preform and spaced away from the deformable mandrel (22) by slight play J so as to favor the sliding between the mandrel and the preform.
